# EUROPÄISCHE PATENTSCHRIFT

(11) **EP 0 792 717 B1**
(45) Veröffentlichungstag und Bekanntmachung des Hinweises auf die Patenterteilung: **19.07.2000**
(21) Anmeldenummer: 97102953.3
(22) Anmeldetag: 22.02.1997
(51) Int. Cl.: B23K 26/02, B23K 26/08, B23K 26/00

(54) **Verfahren zum Laserstrahlschneiden von Werkstücken**
Process for laser cutting of workpieces
Procédé de coupage de pièces au laser

(30) Priorität: 27.02.1996 DE 19607376
(43) Veröffentlichungstag der Anmeldung: 03.09.1997
(73) Patentinhaber: Thyssen Laser-Technik GmbH, 52074 Aachen (DE)
(72) Erfinder: Zimmermann, Klaus, Dipl.-Ing., 52074 Aachen (DE)
(74) Vertreter: Eichler, Peter, Dipl.-Ing.

(56) Entgegenhaltungen:
- DE-A- 3 926 859
- DE-A- 19 506 591

## Beschreibung

Die Erfindung bezieht sich auf ein Verfahren zum Laserstrahlschneiden von Werkstücken, bei dem die Wärmestrahlung des Schneidbereichs mit einem Sensor erfaßt wird und dessen Meßsignale einer Auswerteeinheit zugeleitet werden, mit der ein Verfahrensparameter des mit kontinuierlicher Laserstrahlung erfolgenden Schneidens beeinflußt wird, falls ein Meßsignal einen eingestellten Schwellwert überschreitet.

Ein Verfahren mit den vorgenannten Merkmalen ist aus der DE 39 26 859 A1 bekannt. Die Wärmestrahlung ist temperaturabhängig, daß heißt, bei bestimmten Temperaturen wird Wärme bzw. Licht ganz bestimmter Wellenlängen erzeugt. Tritt Wärmestrahlung dieser Wellenlänge mit bestimmter Intensität auf, so kann davon ausgegangen werden, daß die Bearbeitungsstelle eine ganz bestimmte, durch die Wellenlänge und ihre Intensität charakterisierte Temperatur hat. Bei dieser Temperatur liegt für eine bestimmte Werkstückgeometrie ein bestimmtes Bearbeitungsergebnis vor, beispielsweise eine bestimmte Schnittqualität. Dementsprechend wird das bekannte Verfahren mit einem oberen Schwellwert durchgeführt, der nicht überschritten werden darf, wenn es vermieden werden soll, ein unerwünschtes Bearbeitungsergebnis zu erhalten. Entsprechend wird bei dem bekannten Verfahren ein unterer Schwellwert bestimmt und durch einfaches Ein- und Abschalten des Lasers soll ein qualitativ annehmbares Bearbeitungsergebnis erreicht werden. Dieses bekannte Verfahren kann jedoch bezüglich der Schneidgeschwindigkeit noch optimiert werden.

Der Erfindung liegt daher die Aufgabe zugrunde, ein Verfahren mit den eingangs genannten Verfahrensschritten so zu verbessern, daß die Schneidgeschwindigkeit gesteigert wird.

Diese Aufgabe wird dadurch gelöst, daß die Schneidgeschwindigkeit um eine vorbestimmte Stufe reduziert wird, wenn der Schwellwert um eine vorbestimmte Zeit und/oder um ein vorbestimmtes Maß überschritten wird, daß die stufenweise Reduzierung der Schneidgeschwindigkeit bedarfsweise wiederholt vorgenommen wird, bis der Schwellwert während der vorbestimmten Zeit nicht überschritten wird, und daß mit der reduzierten, nicht wieder erhöhten Schneidgeschwindigkeit weiter geschnitten wird.

Für die Erfindung ist von Bedeutung, daß lediglich ein einziger Schwellwert benutzt wird, um die Schneidgeschwindigkeit des Laserstrahlschneidens zu beeinflussen. Dabei wird eine stufenweise Reduzierung der Schneidgeschwindigkeit eingesetzt, so daß diese nur so wenig wie nötig reduziert werden muß. Das Ausmaß der Reduzierung der Schneidgeschwindigkeit je Stufe kann an die Prozeßempfindlichkeit angepaßt werden, so daß mit einer vergleichsweise geringen Zurücknahme der Schneidgeschwindigkeit gearbeitet werden kann. Das Ausmaß der vorbestimmten Zeit zum Messen ermöglicht eine Optimierung der Schneidgeschwindigkeit ebenso, wie die Ermittlung des Ausmasses, in dem die Wärmestrahlung den vorbestimmten Schwellwert überschreitet. Um mit der vorbeschriebenen Regelung mit Sicherheit in einen Bearbeitungsbereich zu gelangen, der trotz hoher Schneidgeschwindigkeit ein stabiles und qualitätssicheres Arbeiten erlaubt, kann die stufenweise Reduzierung der Schneidgeschwindigkeit wiederholt vorgenommen werden. Ist dann eine Schneidgeschwindigkeit erreicht, die für eine bestimmte Bearbeitungsqualität so hoch wie möglich ist, andererseits aber nicht zu hoch, wird ohne nachfolgende Erhöhung der Schneidgeschwindigkeit weiter geschnitten.

Das vorgeschriebene Verfahren kann dahingehend spezifiziert werden, daß nach einem Überschreiten des Schwellwertes aufeinanderfolgend Abtastwerte der Wärmestrahlung von der Auswerteeinheit mit dem Schwellwert verglichen werden, daß die Zahl der letzteren überschreitenden Abtastwerte gezählt wird, und daß die stufenweise Reduzierung der Schneidgeschwindigkeit bei Überschreiten einer vorbestimmten Anzahl erfolgt. Dabei wird die Zahl der Messungen so bestimmt, daß sie der oben genannten vorbestimmten Zeit entspricht. Die Zahl muß ausreichen, um über den Schneidprozeß eine hinreichend sichere Aussage hinsichtlich des Wärmezustands des Schneidbereichs machen zu können. Beispielsweise werden zehn Abtastwerte ermittelt. Anhand dieser zehn Werte kann auch festgestellt werden, ob der Schwellwert um ein vorbestimmtes Maß überschritten wird, ob also die auf die Zeiteinheit bezogene Vergrößerung der Wärmestrahlung bzw. die Anstiegsgeschwindigkeit ein Mindestmaß überschritten hat. Ist das nicht der Fall, braucht die Regelung nicht aktiv zu werden, da der Prozeß nicht zu kippen droht. Andererseits braucht die Regelung aber auch dann nicht einzugreifen, wenn der Schwellenwert zwar um ein vorbestimmtes Maß überschritten wird, die vorbestimmte Zeit jedoch nicht erreicht wird. Auch dann wird der Schneidprozeß nicht instabil.

Bei den vorbeschriebenen Verfahren läßt sich immer mit der maximalmöglichen Geschwindigkeit schneiden, ohne daß die Gefahr einer Beschädigung der Anlage besteht, z.B. durch Schäden an Düse oder Optik, und ohne daß die Gefahr des nicht mehr Durchtrennens besteht. Dadurch wird die Wirtschaftlichkeit des Laserstrahlschneidverfahrens wesentlich verbessert.

Im Sinne einer Automatisierung kann so verfahren werden, daß der Schwellwert automatisch auf denjenigen Mittelwert der Schneidgeschwindigkeiten eingestellt wird, der sich für eine vorbestimmte Mittelungsdauer aus solchen Schneidgeschwindigkeiten ergibt, für die der Schwellwert nach einer Reduzierungsphase für die vorbestimmte Zeitdauer nicht überschritten wurde. Auf diese Weise kann sich der Schwellwert selbst einstellen. Das System ist lernfähig. Die Mittelungsdauer ist eine längere Zeit unter optimalen Schneidbedingungen. Nach einer derartigen Mittelung von zulässigen Schneidgeschwindigkeiten unter optimalen Schneidbedingungen kann der neue Schwellwert dann entsprechend dem errechneten Mittelwert zuzüglich 30% bis 50% festgelegt werden.

Es muß Vorsorge dafür getroffen werden, daß die Schneidgeschwindigkeit nicht zu gering ist. Um dies zu gewährleisten, wird so verfahren, daß eine Warnmeldung erfolgt und/ oder daß das Laserstrahlschneiden unterbrochen wird, wenn eine voreingestellte Schneidmindestgeschwindigkeit unterschritten wird. Die Warnmeldung macht die Bedienungsperson darauf aufmerksam, daß die Schneidleistung bzw. die Schneidgeschwindigkeit unzureichend ist. Die Warnmeldung kann auch dazu benutzt werden, automatisch eine Dokumentierung zu erstellen, die beispielsweise Uhrzeit, Art des Fehlers und eingestelle Schneidparameter abzuspeichern erlaubt. Das optionale Unterbrechen des Schneidens erfolgt, wenn eine Gefahr für die Schneidvorrichtung besteht. Zur Vermeidung von Zerstörungen und Beschädigungen kann der Shutter geschlossen werden und die Servomotoren werden angehalten.

Eine weitere Ausgestaltung des Verfahrens besteht darin, daß nach einer Geschwindigkeitsreduzierung eine vorbestimmte Totzeit verstreicht, bis bedarfsweise eine wiederholte Reduzierung der Schneidgeschwindigkeit erfolgt. Die Totzeit ermöglicht ein Abwarten, um Ansprechverzögerungen der Servomotoren für die Verstellung der Bearbeitungsoptik zu berücksichtigen, bevor wieder gemessen wird. Auf diese Weise werden Fehlmessungen verhindert.

Das Verfahren kann so durchgeführt werden, daß der Schwellwert und/oder die Anzahl der Abtastwerte beim Zählen der den Schwellwert überschreitenden Meßwerte und/oder die Stufenhöhe der stufenweisen Reduzierung der Schneidgeschwindigkeit von Hand und/oder nach einem vorbestimmten Programm automatisch einstellbar sind. Die Bemessung des Schwellwerts und/oder der Zahl der Abtastwerte und/oder der Stufenhöhe der Reduzierung der Schneidgeschwindigkeit ermöglichen es einzeln oder in Kombination, die Schneidgeschwindigkeit in Verwertung von Erfahrungsergebnissen zu optimieren. Ihre Einstellung von Hand, z.B. mit einem Override-Regler, ermöglicht eine Heraufsetzung der Geschwindigkeit unabhängig von allen Vorgaben. Das ist insbesondere dann vorteilhaft, wenn nicht genügend Verfahrensparameter bekannt sind, weil es sich um ein zuvor nicht bekanntes Werkstück handelt. Demgegenüber ist eine automatische Einstellung nach einem vorbestimmten Programm von Vorteil, wenn beim Schneiden zwischen unterschiedlichen, an sich bekannten Verfahren bzw. Werkstücken gewechselt werden soll. Beispielsweise kann einer bestimmten Anzahl von Blechdicken ein jeweils unterschiedlicher Parametersatz zugeordnet sein, so daß der Anwender im Betrieb nur noch zwischen den Dickenbereichen wählen muß, nämlich durch entsprechende Einstellung der Auswerteeinheit. Dabei können alle Parameter in einem speziellen Menü verändert und abgespeichert werden. Die automatische Einstellung ist so durchzuführen, daß der Parametersatz nicht veränderbar ist. Besonders in diesem Fall kann ein Parametersatz zur Initialisierung dienen, wenn das System total verstellt ist.

Das Laserstrahlschneiden wird üblicherweise nicht von der Kante eines Werkstücks aus durchgeführt, also so, daß z. B. von der Seite eines Blechs eingeschnitten wird. Hierfür ist beispielsweise die Einstellung senkrecht zur Werkstückoberfläche zu aufwendig. Vielmehr wird vor dem Laserstrahlschneiden eingelocht. Die weitere Ausgestaltung der Erfindung bezieht sich daher auch auf ein Zusätzliches Verfahren zum Laserstrahlschneiden von Werkstücken, in die zu Bearbeitungsbeginn mit Laserstrahlung eingelocht wird, wobei die Wärmestrahlung des Einlochbereichs mit einem Sensor erfaßt und dessen Meßsignale einer Auswerteeinheit zugeleitet werden, die eine Ausschaltung der Laserstrahlung veranlaßt, sobald ein Meßsignal einen eingestellten Schwellwert überschreitet und die eine erneute Einschaltung der Laserstrahlung veranlaßt.

Das vorgenannte Verfahren ist aus der DE 39 26 859 A1 bekannt. Die nach dem Ausschalten der Laserstrahlung wegen Überschreitung des eingestellten Schwellwertes erfolgende erneute Einschaltung der Laserstrahlung erfolgt in Abhängigkeit von einem unteren Grenzwert. Infolgedessen ist das Verfahren zwar für geringe Einlochtiefen geeignet, bei größeren Einlochtiefen versagt das Verfahren jedoch, das Werkstück wird also nicht durchbohrt.

Demgegenüber liegt eine weitere Ausgestaltung der Erfindung gemäß Anspruch 1 die Aufgabe zugrunde, das Verfahren mit den vorbeschriebenen Verfahrensschritten so zu verbessern, daß es auch für größere Einlochtiefen Anwendung finden kann, beispielsweise für Blechdicken über 5 mm.

Diese Aufgabe wird dadurch gelöst, daß die erneute Einschaltung der Laserstrahlung nach einer frei vorbestimmbaren Zeit erfolgt, während der die Laserstrahlung abgeschaltet ist und anschließend des Verfahrens nach einem der Ansprüche 1-6 durchgeführt wird. Das Verfahren mit einer frei vorbestimmten Zeit für die erneute Einschaltung der Laserstrahlung ermöglicht es, vergleichsweise mehr Energie einzubringen und dadurch ein verbessertes Einlochergebnis erzielen. Es ist nicht erforderlich, das Erreichen eines unteren Grenzwerts der Wärmestrahlung abzuwarten, so daß das Verfahren dementsprechend nicht an das systembedingte Absinken der Wärmestrahlung gekoppelt ist. Das ist insbesondere für größere Einlochtiefen von Vorteil, wo sich wesentlich erhöhte Zeitkonstanten für das Abklingen der Wärmestrahlung ergeben.

Die vorbeschriebene Regelung des Einlochens kann dadurch verbessert werden, daß aufeinanderfolgend mehrere Ein- und Ausschaltungen als erster Einlochzyklus mit vorbestimmter erster Zyklusdauer erfolgen, und daß nach einer vorbestimmten zyklusfreien Zeit ein zweiter oder weiterer Einlochzyklus mit vorbestimmter zweiter oder weiterer Zyklusdauer erfolgt. Die Zyklusdauern und die zyklusfreien Zeiten sind frei vorbestimmbar, so daß sich entsprechende Freizügigkeiten bei der Gestaltung des Verfahrens ergeben. Es wird eine Pulsweiten-Modulation betrieben, die eine vergleichsweise große Freizügigkeit gestattet, beispielsweise zur Abstimmung auf in Einlochrichtung aufeinander folgende unterschiedliche Werkstoffschichten. Hierdurch ist es möglich, daß in den größeren Pausen wieder Prozeßgas (O₂) in das Bohrloch eindringen kann.

Eine weitere Verbesserung des Verfahrens kann sich dadurch ergeben, daß die mittlere Laserleistung mit zunehmender Einlochtiefe bis auf eine Maximalleistung gesteigert wird. Dies kann durch Einflußnahme auf den Laser geschehen. Die Steigerung der mittleren Laserleistung kann jedoch auch durch ein wachsendes Verhältnis von Einschaltzeiten zu Ausschaltzeiten erreicht werden.

Wenn das Einlochen durch das Werkstück hindurch erfolgt ist, das Bohrloch also durchgängig ist, kann der Einlochvorgang abgebrochen werden. Um diesen Zustand zu ermitteln, wird so verfahren, daß die Laserleistung abgeschaltet wird, wenn das Meßsignal für eine vorbestimmte Zeit unter einem vorbestimmten Grenzwert liegt.

Es ist möglich, daß dieses Verfahren nur bei Blechen von weniger als 10 mm Dicke funktioniert, so daß noch weitere Abbruchkriterien hinzugezogen werden sollten. Daher kann das Verfahren so durchgeführt werden, daß zur Auswertung der Meßsignale eine einstellbare Anzahl von Abtastwerten während des genannten Einlochvorgangs gemittelt wird. Eine Mittelwertbildung über z.B. zehn Abtastwerte ergibt einen verläßlichen Anhalt dafür, daß das Einlochen beendet ist. Des weiteren sind die Beachtung der Maxima und Minima sowie das Übersteuern während des Abtastens von Vorteil, wobei dieses auch erfolgen muß, während der Laser abgeschaltet ist.

Bei den aus der DE 39 26 859 A1 bekannten Verfahren erfolgt die Beobachtung der Wärmestrahlung mit einem Scraperspiegel, dessen Loch im Umlenkbereich der Laserstrahlung angeordnet ist und dessen Lochdurchmesser so klein ist, daß nur ein vergleichsweise unbedeutender Anteil der Laserstrahlung nicht umgelenkt wird. Andererseits gelangt infolge des kleinen Lochdurchmessers aber nur ein entsprechend geringer Anteil der Wärmestrahlung in den Meßbereich. Infolgedessen ist das Meßsignal vergleichsweise klein und auch von lokalen Strahlungsschwankungen abhängig. Das Verfahren wird infolgedessen dadurch verbessert, daß die Wärmestrahlung mit einem Scraperspiegel aus dem Strahlengang der Laserstrahlung ausgekoppelt wird, dessen Lochdurchmesser an den Durchmesser der Laserstrahlung angepaßt ist. Infolgedessen tritt die Laserstrahlung durch das Loch des Scraperspiegels ungehindert und verlustfrei hindurch. Andererseits ist die Spiegelfläche des Scraperspiegels für die Wärmestrahlung im Vergleich zum Scraperspiegel groß, so daß dementsprechend große Wärmestrahlungsanteile für die Messung herangezogen werden können. Es ergeben sich vergleichsweise große und von lokalen Wärmeschwankungen unabhängige Meßwerte. Zum Einlochen eignen sich Loch- und Scraperspiegel, wohingegen bei der Schneidüberwachung nur der Scraperspiegel genügend Signalintensität liefert.

Eine weitere Verbesserung beim Einlochen ergibt sich dadurch, daß die Laserstrahlung im Bereich der Einlochachse radial bewegt wird. Es erfolgt eine Vergrößerung des Lochs, um den Austritt des geschmolzenen und verdampften Werkstoffs auch aus größeren Tiefen zu ermöglichen und damit das Einlochen in größere Tiefen zu erleichtern. Des weiteren erreicht mehr Laserleistung den Bohrlochboden, was die Bohrgeschwindigkeit erhöht.

Die Erfindung wird anhand von in den Zeichnungen dargestellten Vorrichtungen und Verfahrensabläufen erläutert. Es zeigt:
- Fig.1: eine schematische Darstellung einer Überwachungseinrichtung mit einem Scraperspiegel zur Auskopplung von Wärmestrahlung aus dem Strahlengang aus der Laserstrahlung,
- Fig.2: die diagrammatische Abhängigkeit der Strahlungsintensität der Wärmestrahlung von der Zeit beim Laserstrahlschneiden,
- Fig.3: die auf Fig.2 bezogene diagrammatische Darstellung der Schneidgeschwindigkeit von der Zeit,
- Fig.4: die diagrammatische Abhängigkeit der Laserleistung von der Zeit, bezogen auf die Steuerspannung zur Steuerung der Laserleistung,
- Fig.5: die Abhängigkeit der Laserleistung von der Zeit, und
- Fig.6: eine schematische Darstellung zur Erläuterung des Einlochens bei größeren Werkstückdicken s.

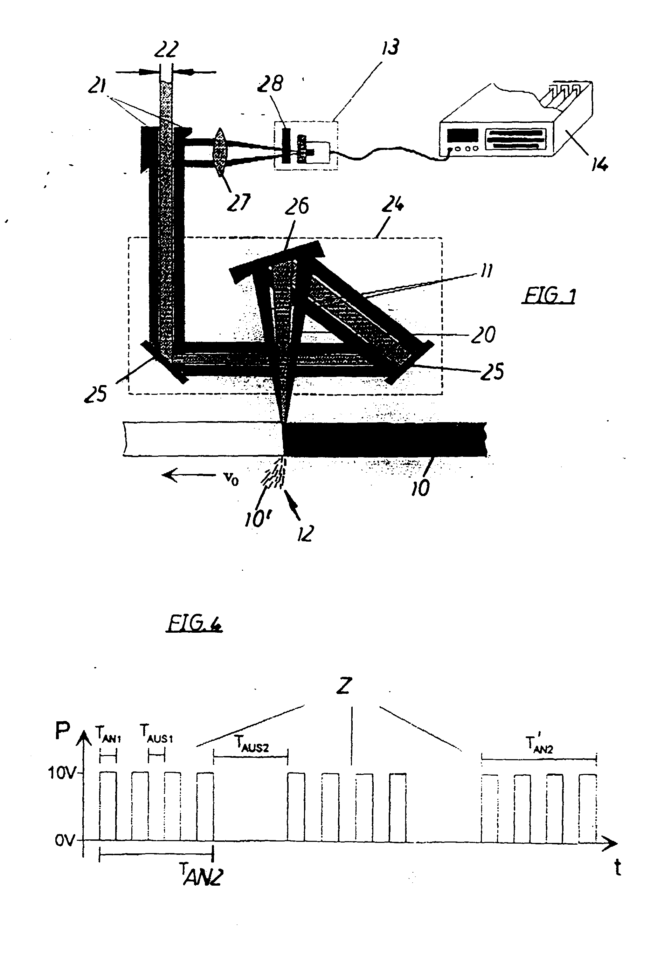

Gemäß Fig.1 wird ein Werkstück 10 mit Laserstrahlung 20 geschnitten. Der Schneidbereich ist mit 12 bezeichnet. Das Werkstück 10 wird in der Richtung des angegebenen Pfeils mit der Schneidgeschwindigkeit v₀ bewegt. Das Werkstück 10 wird durchgeschnitten, so daß der Werkstoff 10' des Werkstücks 10 nach unten ausgeblasen wird. Infolgedessen ist das Werkstück links des Schneidbereichs 12 geschnitten und rechts ungeschnitten.

Die Laserstrahlung 20 gelangt von einem nicht dargestellten Laser durch einen Scraperspiegel 21 in einen Bearbeitungskopf 24 einer Schneideinrichtung. Der Bearbeitungskopf 24 hat im Strahlengang hintereinander angeordnete Umlenkspiegel 25, die die Laserstrahlung 20 einem Fokussierspiegel 26 zuleiten, der die Laserstrahlung wie angegeben dem Werkstück fokussiert zuleitet, so daß der Fokus im Bereich des Werkstücks 10 liegt, vgl. insbesondere Fig.6.

Beim Schneiden entsteht Wärmestrahlung 11, die aus dem Schneidbereich 12 zurück in den Bearbeitungskopf 24 gelangt, wo sie durch die Spiegel 26,25 auf den Scraperspiegel 21 reflektiert wird. Der Scraperspiegel 21 ist im Außendurchmesser größer bemessen, als es dem Durchmesser 22 der Laserstrahlung 20 entspricht, so daß die auf ihn treffende Wärmestrahlung 11 aus dem dargestellten Strahlengang abgelenkt und über eine Sammellinse 27 einem Sensor 13 zugeführt wird. Der Scraperspiegel 21 könnte auch fokussieren. Dann fällt die Linse 27 weg. Bestandteil des Sensors ist ein optischer Filter 28, der unerwünschte Strahlung ausblendet, die das Meßsignal verfälschen könnte, beispielsweise reflektierte Laserstrahlung. Das vom Sensor 13 erzeugte Meßsignal gelangt in eine Auswerteeinheit 14. Mit Hilfe dieser Auswerteeinheit 14 wird in nicht dargestellter Weise eine Regelung der Schneidgeschwindigkeit v0 durchgeführt, indem beispielsweise Einfluß auf Servomotoren genommen wird. Die bei der Auswertung benutzte effektive Geschwindigkeit wird aus der geometrischen Addition der einzelnen Geschwindigkeiten der Servomotoren für die Richtungen der x- und y-Achsen vorgenommen.

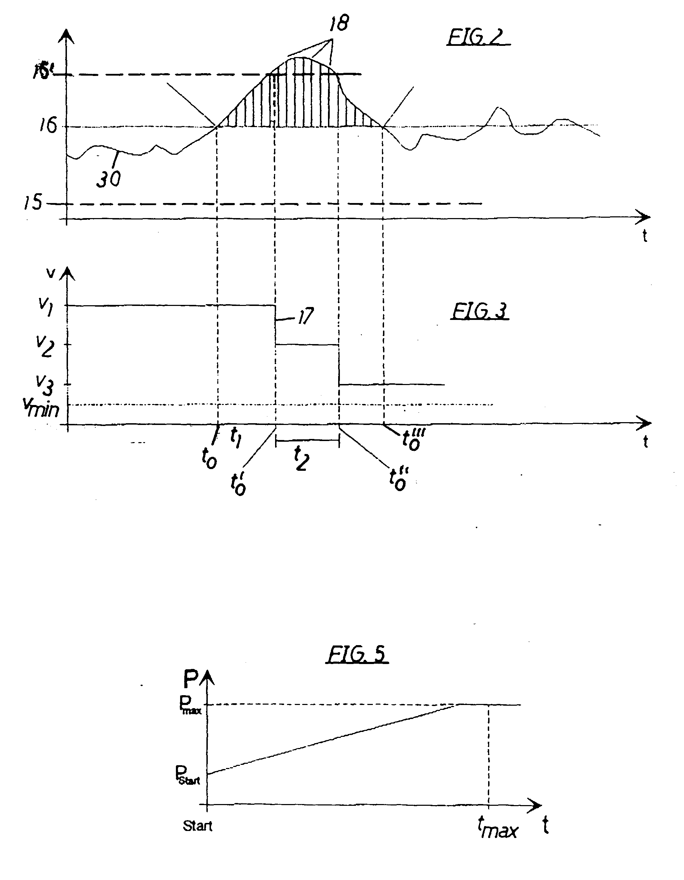

Die durch die Auswerteeinheit 14 eingeleitete Regelung greift nicht ein, solange die Intensität der Wärmestrahlung bzw. des Schmelzleuchtens unterhalb eines eingestellten Schwellwerts 16 liegt, der in Fig.2 gepunktet über der Zeit dargestellt ist. Der Verlauf 30 der Meßsignale in Abhängigkeit von der Zeit zeigt, daß die Meßsignale von der Zeit t = 0 bis t₀ unkritisch ist. Zum Zeitpunkt t₀ wird der Schwellwert 16 erreicht. Die Auswerteeinheit 14 hat einen nicht näher dargestellten Zähler, der zum Zeitpunkt t₀ zu zählen beginnt. Es werden Abtastwerte (Mittelwerte) gezählt, die im Zeitbereich von t₁ über dem Schwellwert 16 liegen. Die Zeit t₁ ist eine vorbestimmte Zeit, deren Dauer mit Hilfe der Auswerteeinheit 14 bestimmt wird. Eine Bestimmung ergibt sich beispielsweise dadurch, daß für diese Zeit t₁ eine Anzahl von Abtastwerten 18 festgelegt wird, für die jeweils eine Messung erfolgt. Fig.2 zeigt mehrere solcher Abtastwerte 18 im zeitlichen Verlauf. Für die Zeit t₁ liegen alle Abtastwerte 18 so hoch, daß jeweils der Schwellwert 16 überschritten wird.

Außerdem zeigt Fig.2, daß der Schwellwert 16 um ein vorbestimmtes Maß überschritten wird, welches dadurch bestimmt wird, daß eine Strahlungsintensität 16' erreicht wird, was einer kritischen Anstiegsgeschwindigkeit der Wärmestrahlung während der Zeit t₁ entspricht.

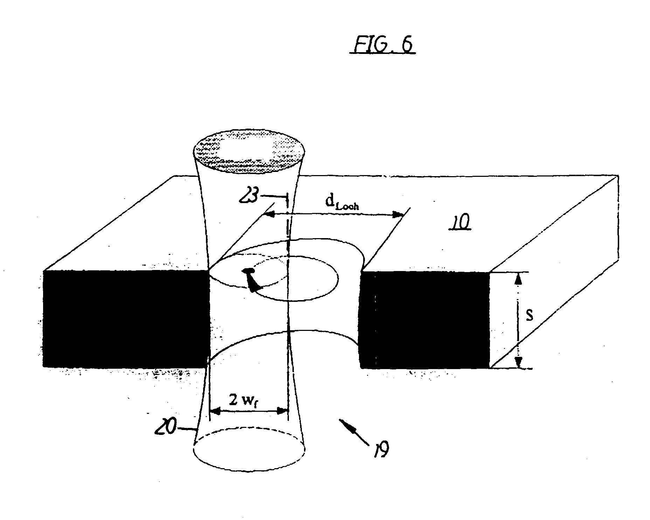

Aus beiden vorgenannten Gründen muß die Schneidgeschwindigkeit v₁ reduziert werden, die in Fig.3 beispielsweise dargestellt ist. Zum Zeitpunkt t₀' erfolgt eine Abstufung der Schneidgeschwindigkeit von v₁ auf v₂.

Es kann nun sein, daß die Strahlungsintensität sehr schnell unter den Schwellwert 16 sinkt. Fig.2 zeigt jedoch beispielsweise, daß noch nach der Zeit t₂ ein Abtastwert 18 vorliegt, der den Schwellwert 16 überschreitet. Infolgedessen hat die mit der Stufenhöhe v₁ - v₂ vorgenommene Abstufung der Schneidgeschwindigkeit nicht ausgereicht und es muß zur Vermeidung von Schneidfehlern eine weitere Abstufung vorgenommen werden, nämlich auf die Schneidgeschwindigkeit v₃ zum Zeitpunkt t₀''. Wird diese Schneidgeschwindigkeit v₃ eingehalten, so fällt der Kurvenverlauf 30 in Fig.2 unter den Schwellwert 16. Zum betreffenden Zeitpunkt t₀"' ist die Wärmestrahlung 11 so abgeklungen, daß ein unkritischer Bereich erreicht wurde und die Schneidgeschwindigkeit v₃ kann beibehalten werden. Sie liegt oberhalb der Schneidgeschwindigkeit vₘᵢₙ. Zum Zeitpunkt t₀''' wird der Zähler der Abtasteinheit 14 auf null zurückgesetzt.

Würde bei einer Abstufung der Schneidgeschwindigkeit v₁ diese Schneidmindestgeschwindigkeit vₘᵢₙ unterschritten, so kann die Auswerteeinheit 14 eine Warnmeldung veranlassen bzw. das Laserstrahlschneiden unterbrechen. Im Darstellungsfall der Fig.3 hat sich der Prozeß jedoch bei v₃ gefangen und es wird dann mit dieser Geschwindigkeit weitergefahren, wobei die Geschwindigkeit nicht wieder erhöht wird.

Die Zeit t₂ entspricht einer Totzeit nach einer Geschwindigkeitsreduzierung und ist erforderlich, um Einstellungen des mechanischen Systems vornehmen zu können, ohne daß diese in eine etwaige Messung eingehen und Fehler verursachen. Auch beim Beginn des Laserstrahlschneidens erfolgt die Messung verzögert, um fehlerhafte Anlaufmessungen zu vermeiden. Die infolgedessen auftretenden Geschwindigkeitsfehler sind von geringer Bedeutung.

Vor Beginn des Schneidens wird das Werkstück 10 eingelocht. Fig.6 zeigt den Einlochbereich 19 des Werkstücks 10 mit einer Werkstückdicke s. Das Vorloch hat einen Lochdurchmesser d_{Loch}, der etwas größer ist, als der Mindestdurchmesser 2w_{f} der Laserstrahlung 20.

In Fig.6 ist dargestellt, daß die Laserstrahlung im Bereich der Einlochachse 23 radial bewegt wird, was beispielsweise durch kreisförmiges Bewegen des Bearbeitungskopfs 24 um die Einlochachse 23 geschieht. Durch dieses insbesondere bei größeren Blechen erforderliche Scannen der Laserstrahlung 20 wird das Bohren in größere Einlochtiefen erleichtert.

Eine weitere Maßnahme zur Erleichterung des Einlochens in größere Werkstücktiefen ist es, die mittlere Laserleistung P gemäß Fig.5 im Laufe des Einlochens zu vergrößern. Zu Beginn des Einlochens ist eine Startleistung P_{Start} eingestellt, z.B. 500 W. Diese wird dann im Laufe der Einlochzeit t bis auf den Maximalwert Pₘₐₓ erhöht, beispielsweise 1,4 kW. Es wird unterstellt, daß das Einlochen das der Zeit tₘₐₓ durchgeführt wurde, so daß dann in den Schneidbetrieb übergegangen werden kann.

Insbesondere bei größeren Einlochtiefen ist es von Interesse, das Einlochen schnell und unter Gewährleistung eines möglichst kleinen Lochdurchmessers durchführen zu können. Es findet daher eine Regelung der Laserleistung in Abhängigkeit von Meßergebnissen statt, die durch Überwachung der Wärmestrahlung 11 erhalten werden. Eingesetzt wird eine Modulation der Pulsweite, wie sie prinzipiell in Fig.4 dargestellt ist. Diese Modulation wird durch Ein- und Ausschalten des Lasers erreicht. Dabei kann, wie auch beim Laserstrahlschneiden, zugleich eine Gaszufuhr geregelt werden. Als Gas wird beispielsweise O₂ eingesetzt, so daß ein Oxydeinlochen stattfindet.

Der Laser wird für eine Zeit T_{AN1} eingeschaltet und danach für eine Zeit T_{AUS1} abgeschaltet. Fig.4 zeigt einen ersten Einlochzyklus mit einer Zyklusdauer T_{AN2}, während der der Laser 4 mal eingeschaltet wird, worauf sich jeweils eine Abschaltung anschließt. Die 4. Abschaltung ist einer zyklusfreien Zeit T_{AUS2} zugeordnet, während der der Laser vergleichsweise lange abgeschaltet bleibt. Danach schließen sich weitere Zyklen Z an. Die Kenngrößen der Zyklen Z, nämlich T_{AN1}, T_{AUS1}, T_{AN2} und T_{AUS2} sind jeweils als Parameter frei einstellbar und erlauben es, auf die Geometrie des Werkstücks 14 Rücksicht zu nehmen, beispielsweise falls dieses von der dargestellten einfachen Blechgestalt abweicht. Mit Hilfe der vorbeschriebenen Parameter kann auch die Laserleistung im Sinne der Fig.3 kontinuierlich erhöht werden, beispielsweise durch Veränderung des Verhältnisses von T_{AN1} zu T_{AUS1}. Das Ansteuersignal kann durch die Auswerteeinheit 14 erzeugt werden, oder auch durch ein von einer CNC-Steuerung vorgegebenes Signal.

Das Einlochen wird beendet, wenn das Meßsignal für eine vorbestimmte Zeit unter einem vorbestimmten Grenzwert 15 liegt, der in Fig.2 beispielsweise eingezeichnet wurde. Es ist dann davon auszugehen, daß das Einlochen beendet ist, weil die gesamte Dicke des Werkstücks 10 durchlocht wurde.

Auch beim Einlochen kann eine Abtastung der Meßwerte der Wärmestrahlung 11 durchgeführt werden, so daß die Meßzeit in einfacher Weise durch eine Einstellung der Anzahl der Abtastungen bestimmt wird. Das Beenden des Einlochvorgangs erfolgt dann durch Mittelung der Abtastwerte der eingestellten Anzahl.

Wenn das Einlochen beendet ist, erzeugt die Auswerteeinheit 14 ein Steuersignal zum Beginn des Laserstrahlschneidens einschließlich Überwachung des Schneidvorgangs gemäß Fig.2,3.

## Patentansprüche

1. Verfahren zum Laserstrahlschneiden von Werkstücken (10), bei dem die Wärmestrahlung (11) des Schneidbereichs (12) mit einem Sensor (13) erfaßt wird und dessen Meßsignale einer Auswerteeinheit (14) zugeleitet werden, mit der ein Verfahrensparameter des mit kontinuierlicher Laserstrahlung (20) erfolgenden Schneidens beeinflußt wird, falls ein Meßsignal einen eingestellten Schwellwert (16) überschreitet, **dadurch gekennzeichnet**, daß die Schneidgeschwindigkeit (v₁) um eine vorbestimmte Stufe (17) reduziert wird, wenn der Schwellwert (16) um eine vorbestimmte Zeit (t₁) und/oder um ein vorbestimmtes Maß überschritten wird, daß die stufenweise Reduzierung der Schneidgeschwindigkeit (v₁) bedarfsweise wiederholt vorgenommen wird, bis der Schwellwert (16) während der vorbestimmten Zeit (t₁) nicht überschritten wird, und daß mit der reduzierten, nicht wieder erhöhten Schneidgeschwindigkeit (v₃) weiter geschnitten wird.

2. Verfahren nach Anspruch 1, **dadurch gekennzeichnet**, daß nach einem Überschreiten des Schwellwertes (16) aufeinanderfolgend Abtastwerte (18) der Wärmestrahlung von der Auswerteeinheit (14) mit dem Schwellwert (16) verglichen werden, daß die Zahl der letzteren überschreitenden Abtastwerte (18) gezählt wird, und daß die stufenweise Reduzierung der Schneidgeschwindigkeit (v₁) bei Überschreiten einer vorbestimmten Anzahl erfolgt.

3. Verfahren nach Anspruch 1 oder 2, **dadurch gekennzeichnet**, daß der Schwellwert (16) automatisch auf denjenigen Mittelwert der Schneidgeschwindigkeiten (v₀) eingestellt wird, der sich für eine vorbestimmte Mittelungsdauer aus solchen Schneidgeschwindigkeiten (v₃) ergibt, für die der Schwellwert (16) nach einer Reduzierungsphase für die vorbestimmte Zeitdauer (t₁) nicht überschritten wurde.

4. Verfahren nach Anspruch 3, **dadurch gekennzeichnet**, daß eine Warnmeldung erfolgt und/oder daß das Laserstrahlschneiden unterbrochen wird, wenn eine voreingestellte Schneidmindestgeschwindigkeit (vₘᵢₙ) unterschritten wird.

5. Verfahren nach Anspruch 4, **dadurch gekennzeichnet**, daß nach einer Geschwindigkeitsreduzierung eine vorbestimmte Totzeit (t₂) verstreicht, bis bedarfsweise eine wiederholte Reduzierung der Schneidgeschwindigkeit erfolgt.

6. Verfahren nach Anspruch 5, **dadurch gekennzeichnet**, daß der Schwellwert (16) und/oder die Anzahl der Abtastwerte (18) beim Zählen der den Schwellwert (16) überschreitenden Meßwerte und/oder die Stufenhöhe (v₁-v₂) der stufenweisen Reduzierung der Schneidgeschwindigkeit von Hand und/oder nach einem vorbestimmten Programm automatisch einstellbar sind.

7. Verfahren nach einem oder mehreren der Ansprüche 1 bis 6, **dadurch gekennzeichnet,** daß in die Werkstücke zu Bearbeitungsbeginn mit Laserstrahlung (20) eingelocht wird, wobei die Wärmestrahlung (11) des Einlochbereichs (19) mit einem Sensor (13) erfaßt und dessen Meßsignale einer Auswerteeinheit (14) zugeleitet werden, die eine Ausschaltung der Laserstrahlung (20) veranlaßt, sobald ein Meßsignal einen eingestellten Schwellwert (16) überschreitet und die eine erneute Einschaltung der Laserstrahlung (20) nach einer frei vorbestimmbaren Zeit (T_{AUS1}) vor Beginn des Verfahrens nach einem oder mehreren der Ansprüche 1 bis 6 veranlaß, Laserstrahlung (20) abgeschaltet ist.

8. Verfahren nach Anspruch 7, **dadurch gekennzeichnet**, daß aufeinanderfolgend mehrere Ein- und Ausschaltungen als erster Einlochzyklus (Z) mit vorbestimmter erster Zyklusdauer (T_{AN2}) erfolgen, und daß nach einer vorbestimmten zyklusfreien Zeit (T_{AUS2}) ein zweiter oder weiterer Einlochzyklus mit vorbestimmter zweiter oder weiterer Zyklusdauer (T'_{AN2}) erfolgt.

9. Verfahren nach Anspruch 7 oder 8, **dadurch gekennzeichnet**, daß die mittlere Laserleistung (P) mit zunehmender Einlochtiefe bis auf eine Maximalleistung (Pmax) gesteigert wird.

10. Verfahren nach einem der Ansprüche 7 bis 9, **dadurch gekennzeichnet**, daß die Laserleistung (20) abgeschaltet wird, wenn das Meßsignal für eine vorbestimmte Zeit unter einem vorbestimmten Grenzwert (15) liegt.

11. Verfahren nach Anspruch 10, **dadurch gekennzeichnet**, daß zur Auswertung der Meßsignale eine einstellbare Anzahl von Abtastwerten während des genannten Einlochvorgangs gemittelt wird.

12. Verfahren nach einem der Ansprüche 1 bis 11, **dadurch gekennzeichnet**, daß die Wärmestrahlung (11) mit einem Scraperspiegel (21) aus dem Strahlengang der Laserstrahlung (20) ausgekoppelt wird, dessen Lochdurchmesser an den Durchmesser (22) der Laserstrahlung (20) angepaßt ist.

13. Verfahren nach einem der Ansprüche 1 bis 12, **dadurch gekennzeichnet**, daß die Laserstrahlung (20) im Bereich der Einlochachse (23) radial bewegt wird.

## Claims

1. Method for the cutting of workpieces (10) using laser beams, in which the thermal radiation (11) of the cutting zone (12) is detected by a sensor (13) and its measurement signals are fed to an evaluation unit (14), by which a process parameter of the cutting operation which is carried out with continuous laser radiation (20) is influenced if a measurement signal exceeds a set threshold value (16), **characterised in that** the cutting speed (v₁) is reduced by a predetermined step (17) if the threshold value (16) is exceeded for a predetermined time (t₁) and/or is exceeded by a predetermined amount, the stepwise reduction of the cutting speed (v₁) is carried out repeatedly as necessary until the threshold value (16) is not exceeded over the predetermined time (t₁), and cutting is resumed with the reduced cutting speed (v₃) which is not increased again.

2. Method according to claim 1, **characterised in that**, after the threshold value (16) has been exceeded, successive scan values (18) of the thermal radiation are compared by the evaluation unit (14) with the threshold value (16), the number of scan values (18) exceeding the threshold value is counted, and the stepwise reduction of the cutting speed (v₁) follows in the event of a predetermined count number being exceeded.

3. Method according to claim 1 or 2, **characterised in that** the threshold value (16) is set automatically to that average value of the cutting speed (v₀) which results from such cutting speeds (v₃) for a predetermined average period for which the threshold value (16) has not been exceeded for the predetermined time period (t₁) after a phase reduction.

4. Method according to claim 3, **characterised in that** an alarm is given and/or the laser beam cutting is interrupted if a preset minimum cutting speed (vₘᵢₙ) is not achieved.

5. Method according to claim 4, **characterised in that** after a speed reduction there elapses a predetermined dead time (t₂) before, if necessary, a repeated reduction of the cutting speed is effected.

6. Method according to claim 5, **characterised in that** the threshold value (16) and/or the count of the scan values (18) on counting of the measured values exceeding the threshold value (16) and/or the step height (v₁-v₂) of the stepwise reduction of the cutting speed can be set manually and/or automatically according to a predetermined programme.

7. Method according to one or more of claims 1 to 6, **characterised in that** a single hole is made in the workpieces at the beginning of the process by laser radiation (20), wherein the thermal radiation (11) of the single-hole zone (19) is detected by a sensor (13) and its measurement signals are fed to an evaluation unit (14) which causes a switching off of the laser radiation (20) as soon as a measurement signal exceeds a set threshold value (16) and which causes a renewed switching on of the laser radiation (20) after a freely determinable time (T_{AUS1}) before the beginning of the method according to one or more of claims 1 to 6.

8. Method according to claim 7, **characterised in that** successive plural switchings on and off are effected as a first single-hole cycle (Z) with predetermined first cycle period (T_{AN2}), and after a predetermined cycle-free time (T_{AUS2}) a second or further single-hole cycle is effected with predetermined second or further cycle period (T'_{AN2}).

9. Method according to claim 7 or 8, **characterised in that** the average laser power (P) is increased with increasing depth of the single hole up to a maximum power (Pₘₐₓ).

10. Method according to one of claims 7 to 9, **characterised in that** the laser power (20) is switched off if the measurement signal is below a predetermined limit value (15) for a predetermined time.

11. Method according to claim 10, **characterised in that** in order to evaluate the measurement signals an adjustable number of scan values is averaged during the said single-hole process.

12. Method according to one of claims 1 to 11, **characterised in that** the thermal radiation (11) is decoupled from the beam path of the laser radiation (20) by a scraper mirror (21) whose hole diameter is matched to the diameter (22) of the laser radiation (20).

13. Method according to one of claims 1 to 12, **characterised in that** the laser radiation (20) is moved radially in the region of the single-hole axis (23).

## Revendications

1. Procédé pour le découpage au laser de pièces (10), selon lequel le rayonnement thermique (11) de la zone de découpage (12) est enregistré à l'aide d'un capteur (13) et les signaux de mesure de celui-ci son transmis à une unité d'évaluation (14) grâce à laquelle un paramètre de procédé du découpage exécuté avec un rayonnement laser continu (20) est influencé au cas où un signal de mesure dépasse une valeur seuil réglée (16), caractérisé en ce que la vitesse de découpage (v₁) est réduite suivant un palier prédéfini (17) si on dépasse la valeur seuil (16) suivant une durée prédéfinie (t₁) et/ou suivant une valeur prédéfinie, en ce que la réduction par palier de la vitesse de découpage (v₁) est renouvelée au besoin jusqu'à ce qu'on ne dépasse pas la valeur seuil (16) pendant la durée prédéfinie (t₁), et en ce qu'on poursuit le découpage à la vitesse réduite (v₃) qui n'est pas à nouveau augmentée.

2. Procédé selon la revendication 1, caractérisé en ce que, après que la valeur seuil (16) a été dépassée, des valeurs de balayage (18) du rayonnement thermique sont comparées successivement par l'unité d'évaluation (14) à la valeur seuil (16), en ce que le nombre des valeurs de balayage (18) dépassant celle-ci est compté et en ce que la réduction par palier de la vitesse de découpage (v₁) a lieu si un nombre prédéfini est dépassé.

3. Procédé selon la revendication 1 ou 2, caractérisé en ce que la valeur seuil (16) est réglée automatiquement sur la valeur moyenne des vitesses de découpage (v₀) qu'on obtient pour une durée moyenne prédéfinie à partir des vitesses de découpage (v₃) pour lesquelles on n'a pas dépassé la valeur seuil (16) après une phase de réduction, pour la durée prédéfinie (t₁).

4. Procédé selon la revendication 3, caractérisé en ce qu'un message d'avertissement est émis et/ou le découpage au laser est interrompu si on descend au-dessous d'une vitesse minimale de découpage préréglée (vₘᵢₙ).

5. Procédé selon la revendication 4, caractérisé en ce que, après une réduction de vitesse, il y a un temps mort prédéfini (t₂) avant qu'une nouvelle réduction de la vitesse de découpage ait lieu au besoin.

6. Procédé selon la revendication 5, caractérisé en ce que la valeur seuil (16) et/ou le nombre de valeurs de balayage (18) lors du comptage des valeurs de mesure dépassant la valeur seuil (16) et/ou la hauteur de palier (v₁-v₂) de la réduction par palier de la vitesse de découpage sont réglables automatiquement manuellement et/ou suivant un programme prédéfini.

7. Procédé selon l'une au moins des revendications 1 à 6, caractérisé en ce que les pièces, au début de l'usinage, sont traversées par un rayonnement laser (20), le rayonnement thermique (11) de la zone de pénétration (19) étant enregistré à l'aide d'un capteur (13) et les signaux de mesure de celui-ci étant transmis à une unité d'évaluation (14) qui provoque un arrêt du rayonnement laser (20) dès qu'un signal de mesure dépasse une valeur seuil réglée (16), et qui provoque une reprise du rayonnement laser (20) au bout d'une durée (T_{AUS1}) apte à être définie librement, avant le début du procédé selon l'une au moins des revendications 1 à 6.

8. Procédé selon la revendication 7, caractérisé en ce que plusieurs mises en marche et arrêts ont lieu successivement comme premier cycle de pénétration (Z), avec une première durée de cycle (T_{AN2}) prédéfinie, et en ce qu'au bout d'une durée sans cycle (T_{AUS2}) prédéfinie, un second cycle ou un autre cycle de pénétration d'une seconde durée ou d'une autre durée de cycle prédéfinies (T'_{AN2} ) a lieu.

9. Procédé selon la revendication 7 ou 8, caractérisé en ce qu'on augmente la puissance laser moyenne (P) jusqu'à une puissance maximale (Pₘₐₓ) au fur et à mesure que la profondeur de pénétration augmente.

10. Procédé selon l'une des revendications 7 à 9, caractérisé en ce que la puissance laser (20) est arrêtée lorsque le signal de mesure est inférieur à une valeur limite prédéfinie (15) pendant une durée prédéfinie.

11. Procédé selon la revendication 10, caractérisé en ce que pour évaluer les signaux de mesure, on calcule la moyenne du nombre réglable de valeurs de balayage pendant l'opération de pénétration.

12. Procédé selon l'une des revendications 1 à 11, caractérisé en ce que, à l'aide d'un miroir (21), on fait sortir le rayonnement thermique (11) de la trajectoire du rayonnement laser (20) dont le diamètre de trou est adapté au diamètre (22) du rayonnement laser (20).

13. Procédé selon l'une des revendications 1 à 12, caractérisé en ce que le rayonnement laser (20) est déplacé radialement dans la zone de l'axe de pénétration (23).
